# FASCICULE DE BREVET EUROPEEN

(11) **EP 2 783 055 B1**
(45) Date de publication et mention de la délivrance du brevet: **27.09.2017**
(21) Numéro de dépôt: 12824706.1
(22) Date de dépôt: 14.11.2012
(51) Int. Cl.: E04F 15/02, E04F 15/04, E04F 13/08, F16B 5/02, F16B 12/46

(54) **CHEVILLE D'ASSEMBLAGE POUR RELIER ENTRE EUX TROIS CORPS**
STIFT ZUM VERBINDEN DREIER KÖRPER MITEINANDER
DOWL FOR JOINING THREE BODIES TOGETHER

(30) Priorité: 25.11.2011 FR 1103603
(43) Date de publication de la demande: 01.10.2014
(73) Titulaire: Cassiux, 1050 Bruxelles (BE)
(72) Inventeur: LUYPAERT, Marc, B-1780 Wemmel (BE)
(74) Mandataire: Flavenot, Bernard
(86) Numéro de dépôt international: PCT/IB2012/002934
(87) Numéro de publication internationale: WO 2013/076585

(56) Documents cités:
- DE-U1-202010 007 198
- US-A1- 2011 123 290
- US-A1- 2011 192 112
- US-B1- 6 402 415

## Description

La présente invention concerne les chevilles d'assemblage pour relier, et ensuite éventuellement fixer entre eux, au moins trois corps, qui trouvent une application particulièrement avantageuse pour la fixation de lamelles ou analogues sur des longerons ou analogues, pour la réalisation par exemple de terrasses, bardages en bois ou analogues, par exemple du type "à claire-voie".

Il est déjà connu de telles chevilles d'assemblage, par exemple celles décrites dans les US-A-2362252 ; 6402412 ; 6851884 ; 7052200 ; 7578105 et 7874113, US 2011/192112 et DE 20 2010 0071 98 U1. Une telle cheville connue pour relier, et éventuellement fixer entre eux, au moins trois corps comme ceux mentionnés ci-dessus, comporte essentiellement une plaque de tête de forme sensiblement parallélépipédique réalisée en un premier matériau et délimitée par deux faces sensiblement planes et une tranche reliant les deux faces, cette plaque de tête définissant selon son épaisseur un premier plan parallèle à ses deux faces, au moins une patte définissant un second plan, cette patte étant solidaire de la plaque de tête sur une de ses faces de façon que le second plan soit sensiblement perpendiculaire au premier et que ce second plan partage la plaque de tête en deux parties avantageusement égales constituant respectivement deux ailes latérales situées de part et d'autre de ce second plan qui sont aptes à coopérer avec des rainures réalisées dans deux des trois corps, au moins un orifice traversant réalisé dans la plaque de tête selon un axe général sensiblement perpendiculaire au premier plan, cet orifice traversant étant agencé pour recevoir un moyen de fixation par liaison, comme une vis comportant une tige et une tête d'épaulement de façon que la tige de vis soit apte à s'enficher dans l'orifice et que la tête d'épaulement soit apte à venir buter contre au moins une partie du bord de l'orifice.

Ce type de cheville d'assemblage comporte en outre une plaque de renfort réalisée en un second matériau plus rigide que le premier, d'une forme sensiblement homothétique de celle de la plaque de tête selon un coefficient inférieur à l'unité et noyée dans la plaque de tête pour avoir une fonction d'armature, cette plaque de renfort comportant une ouverture correspondant sensiblement à l'orifice traversant et étant en général d'une section inférieure à celle de l'orifice.

Une telle cheville d'assemblage donne satisfaction mais, notamment quand elle est utilisée pour relier deux lamelles de plancher avec un longeron, la plaque de tête a tendance à s'incurver vers le longeron, ce qui rend difficile ou impossible l'assemblage avec ce longeron.

De plus, lorsqu'un bord d'une lamelle subit une déformation vers le haut (tuilage), une telle cheville d'assemblage n'y oppose que peu de résistance et se déforme de façon similaire, au risque de sortir de la rainure.

Un tel inconvénient est désagréable quand le plancher est celui, par exemple, d'une terrasse. En effet, de telles déformations des bords des lamelles peuvent constituer une sorte de marche sur laquelle risquent de buter dangereusement les utilisateurs. Il en résulte également un bruit de grincement lorsqu'un utilisateur marche sur la terrasse. Et même, à la longue, ces déformations peuvent contribuer à la désolidarisation totale des lamelles entre elles et du ou des longerons, d'où un danger supplémentaire pour les utilisateurs. Lorsque les lamelles et les longerons ont été réunis pour construire une terrasse ou un bardage décoratif, cet inconvénient est certainement en outre inesthétique.

Aussi, la présente invention a-t-elle pour but de réaliser une cheville d'assemblage du type décrit ci-dessus, mais qui pallie en très grande partie ses inconvénients, et ce, sans en augmenter son prix de revient.

Plus précisément, la présente invention a pour objet une cheville d'assemblage pour la réalisation d'un plancher ou d'un bardage, comportant :
- une plaque de tête de forme sensiblement parallélépipédique réalisée en un premier matériau et délimitée par deux faces sensiblement planes et une tranche reliant les deux faces, ladite plaque de tête définissant un premier plan sensiblement parallèle aux dites deux faces,
- au moins une première patte plane définissant un second plan, ladite première patte étant solidaire de ladite plaque de tête sur l'une des deux faces de façon que le second plan soit sensiblement perpendiculaire au premier plan et qu'il partage ladite plaque de tête en deux parties constituant respectivement deux ailes latérales situées de part et d'autre de ce second plan,
- au moins un orifice traversant réalisé dans ladite plaque de tête selon un axe faisant un angle non nul par rapport au premier plan, et
- une plaque de renfort réalisée en un second matériau plus rigide que le premier, ladite plaque de renfort ayant une forme sensiblement homothétique de celle de la plaque de tête selon un coefficient inférieur à l'unité, ladite plaque de renfort étant noyée au moins partiellement dans ladite plaque de tête et comportant une ouverture correspondant sensiblement au dit orifice traversant, ladite ouverture et ledit orifice traversant étant agencés pour recevoir des moyens de fixation par liaison, caractérisée par le fait qu'elle comporte en outre au moins une nervure présentant un axe longitudinal, ladite nervure étant solidaire en saillie de ladite plaque de renfort de façon que son axe longitudinal soit sensiblement perpendiculaire au dit second plan et parallèle au dit premier plan.

D'autres caractéristiques et avantages de la présente invention apparaîtront au cours de la description suivante donnée en regard des dessins annexés à titre illustratif mais nullement limitatif, dans lesquels :
La figure 1 représente une vue en perspective d'un premier mode de réalisation de la cheville d'assemblage selon l'invention pour fixer entre eux au moins trois corps,
La figure 2 est une vue en coupe transversale de la cheville d'assemblage selon l'invention dans le mode de réalisation illustré sur la figure 1, cette coupe étant référencée I-I sur la figure 1,
La figure 3 est une vue partielle en coupe de l'un des éléments principaux, en l'occurrence la plaque de renfort, entrant dans la structure de la cheville d'assemblage selon l'invention dans le mode de réalisation illustré sur les figures 1 et 2, avec, en encart, un effet de loupe sur une partie de cet élément,
La figure 4 est une vue de l'élément selon la direction indiquée par la flèche F sur la figure 3, et
La figure 5 est une vue partielle et en coupe d'un autre mode de réalisation d'une cheville d'assemblage selon l'invention.

Il est précisé que, dans la présente description, si l'adverbe "sensiblement" est associé à un qualificatif d'un moyen donné, ce qualificatif doit être compris au sens strict ou approché.

En référence à l'ensemble des figures annexées, la cheville d'assemblage selon l'invention, qui permet de relier, et éventuellement fixer entre eux, au moins trois corps L1, L2, L3, comporte une plaque 10 dite "plaque de tête", de forme sensiblement parallélépipédique avantageusement rectangle, réalisée en un premier matériau. De ce fait, cette plaque de tête est délimitée par deux faces 11, 12 sensiblement planes et une tranche 13 reliant les deux faces, et elle définit un premier plan 100 sensiblement parallèle à ses deux faces 11, 12.

La cheville d'assemblage comporte en outre au moins une première patte 21; 22 plane et définissant un second plan 200, cette première patte étant solidaire de la plaque de tête 10 sur l'une 11 des deux faces 11, 12 de façon que le second plan 200 soit sensiblement perpendiculaire au premier plan 100 et qu'il partage la plaque de tête 10 en deux parties constituant respectivement deux ailes latérales 10-1, 10-2 situées de part et d'autre de ce second plan 200, de préférence égales et donc symétriques par rapport au plan 200.

La cheville d'assemblage comporte en outre au moins un orifice traversant 30 réalisé dans la plaque de tête 10 selon un axe 31 faisant un angle non nul par rapport au premier plan 100, de préférence, pour la plus grande partie des applications, sensiblement perpendiculaire à ce premier plan, et une plaque de renfort 40 réalisée en un second matériau plus rigide que le premier, d'une forme sensiblement homothétique de celle de la plaque de tête 10 selon un coefficient inférieur à l'unité, et noyée au moins en grande partie dans la plaque de tête.

Il est précisé que, c'est pour une facilité d'écriture qu'il est mentionné que la plaque de renfort 40 présente une forme sensiblement homothétique de celle de la plaque de tête 10. Car cette expression ne doit pas être prise en son sens strict et la forme de la plaque de renfort peut ne pas être limitée à une forme strictement homothétique de celle de la plaque de tête. Elle peut, par exemple, être ronde, ovale, et même avoir des bords arrondis, ondulés ou analogues, à la condition qu'elle constitue bien un renfort de la plaque de tête.

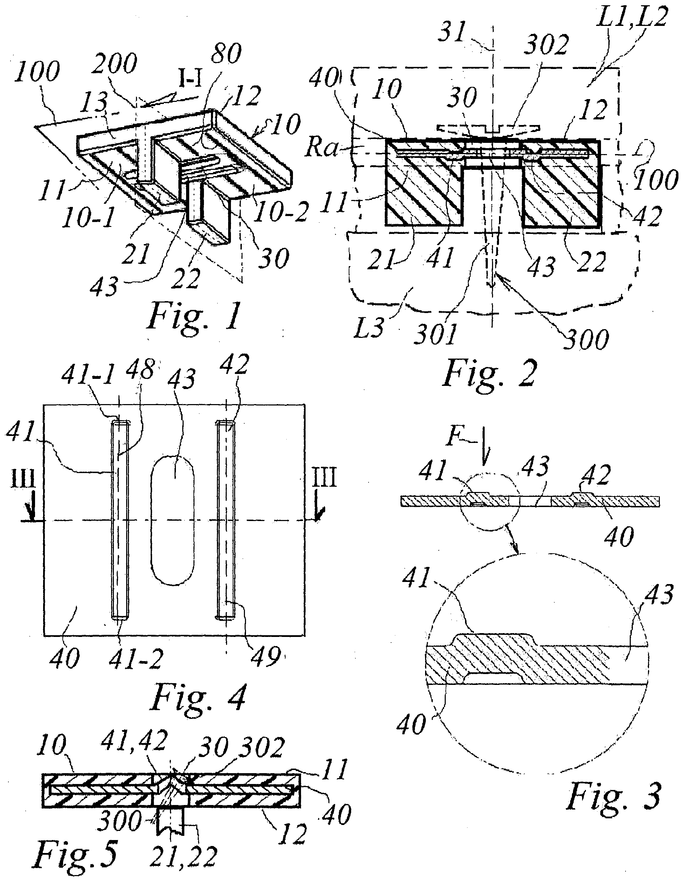

En outre, cette plaque de renfort 40 comporte au moins une ouverture 43 correspondant sensiblement à l'orifice traversant 30, l'ouverture et l'orifice traversant étant agencés pour recevoir des moyens de fixation par liaison qui peuvent être constitués, par exemple, par une vis 300, schématiquement illustrée en traits interrompus sur figure 2, comportant une tige de vis 301 et une tête d'épaulement 302, la tige de vis 301 étant apte à s'enficher dans l'orifice traversant 30 et dans l'ouverture 43, au moins une partie de la tête d'épaulement 302 étant apte à buter contre avantageusement au moins une partie du bord de l'ouverture 43 quand il n'est pas noyé dans la plaque de tête 10, sinon contre au moins une partie du bord de l'orifice traversant 30.

Selon une caractéristique de l'invention, la cheville d'assemblage comporte en outre au moins une nervure 41, 42 présentant un axe longitudinal 48, 49, la nervure étant solidaire en saillie de la plaque de renfort 40 de façon que son axe longitudinal soit sensiblement perpendiculaire au second plan 200 et parallèle au premier plan 100.

De façon préférentielle, pour assurer une raideur à la plaque de renfort au moins selon une direction perpendiculaire à l'axe longitudinal 48, 49 de la nervure 41, 42, la longueur de la nervure 41, 42 prise selon son axe longitudinal 48, 49 est inférieure à la largeur de la plaque de renfort 40 prise selon une direction parallèle à cet axe longitudinal, figure 4, de façon que les deux extrémités 41-1, 41-2 de la nervure ne soit pas confondues avec les bords opposés de la plaque de renfort 40 qui se trouvent dans cet axe longitudinal de la nervure.

De façon très préférentielle, pour obtenir une meilleure rigidité de la plaque de renfort 40 selon une direction définie le long de l'axe longitudinal de la nervure 41, 42, la cheville d'assemblage comporte une autre nervure 42, 41 avantageusement similaire à la nervure 41, 42, les deux nervures étant solidaires de la plaque de renfort 40, préférentiellement de part et d'autre de l'ouverture 43.

De façon préférentielle, notamment pour des raisons d'encombrement et du fait de la faible épaisseur de la plaque de tête 10, les deux nervures 41, 42 sont toutes les deux situées sur une même face de la plaque de renfort 40, de préférence tournées en saillie vers la patte 21, 22, figure 2.

De façon très préférentielle, la au moins une nervure 41, 42 et la plaque de renfort, c'est-à-dire la ou les nervures et la plaque de renfort, sont réalisées à partir d'une pièce, la au moins une des nervures étant obtenue par déformation plastique de cette pièce, par exemple par emboutissage ou même par matriçage.

Egalement de façon très préférentielle, la plaque de tête 10 et la au moins une patte 21, 22 sont réalisées dans le même premier matériau, notamment, un matériau plastique, par exemple un thermoplastique, un polyamide ou analogue, et le second matériau est un matériau métallique comme de l'acier inoxydable ou analogue.

De façon préférentielle, la cheville d'assemblage comporte en outre une seconde patte 22, 21 solidaire de la même face 11 de la plaque de tête 10 que celle dont est solidaire la première patte 21, 22, les première et seconde pattes étant situées dans le second plan 200 et avantageusement de part et d'autre de l'orifice traversant 30.

De façon avantageuse, l'orifice traversant 30 est de forme oblongue selon un axe longitudinal sensiblement perpendiculaire au second plan 200.

Comme illustré plus particulièrement sur les figures 1 et 2, l'ouverture 43 présente une forme homothétique de celle de l'orifice traversant 30 selon un coefficient inférieur à l'unité. De ce fait, le bord de l'ouverture n'est pas recouvert par la plaque de tête et, comme mentionné ci-avant, la tête de vis 302 peut venir en appui uniquement sur la plaque de renfort, figure 2, qui est d'une rigidité supérieure à celle de la plaque de tête 10.

Comme mentionné au préambule de la présente description, une cheville d'assemblage selon l'invention trouve une application particulièrement avantageuse lorsque les trois corps L1, L2, L3 sont constitués, figure 2 et schématiquement illustrés en traits interrompus, de deux lamelles de bois L1, L2 et d'un longeron L3, et que les deux lamelles comportent, sur au moins une partie de leur tranche, une rainure Ra d'une largeur donnée.

Dans ce cas, l'épaisseur de la plaque de tête 10 est déterminée pour avoir une valeur au plus égale à celle de la largeur donnée, de façon que ses deux ailes latérales 10-1, 10-2 soient aptes à s'enficher respectivement au moins partiellement dans les deux rainures Ra respectivement des deux lamelles L1, L2, avantageusement sans jeu.

Dans ce cas également, les nervures sont perpendiculaires aux axes des rainures Ra, l'épaisseur de la au moins une première patte 21, 22, prise selon une direction perpendiculaire au second plan 200, est égale à la distance devant séparer les deux lamelles en regard L1, L2 lorsqu'elles coopèrent respectivement avec les deux ailes pour former par exemple un plancher, un bardage ou un mur du type à "claire-voie" ou analogue.

Quant à la hauteur de la au moins une patte 21, 22, prise selon une perpendiculaire au premier plan, elle est de préférence au plus égale à la distance séparant un bord de la rainure Ra d'une lamelle et la face de cette lamelle la plus proche de ce bord, de façon que les lamelles puissent reposer sur le longeron.

Selon un mode de réalisation avantageux, notamment pour l'application mentionnée ci-dessus, la plaque de tête 10 comporte, sur au moins l'une de ses deux faces opposées 11, 12, en l'occurrence la face 11 sur la figure 1, au moins au niveau d'une des deux ailes latérales 10-1,10-2, au moins une surépaisseur 80 de préférence longitudinale de relativement faible épaisseur pour coincer l'aile 10-1, 10-2 qui la porte, dans la rainure Ra, de façon que la cheville reste en place et ne se perde pas avant qu'elle soit définitivement fixée sur le longeron L3. Avantageusement, la plaque de tête comprendra une pluralité de surépaisseurs 80, comme illustré sur la figure 1.

Dans le mode de réalisation décrit ci-dessus, les nervures 41, 42 sont illustrées comme ne passant pas par l'orifice 30.

Cependant, dans certains cas il peut être intéressant que la cheville d'assemblage comporte une nervure 41, 42 dont l'axe longitudinal 48, 49 passe par cet orifice 30, comme illustré sur la figure 5.

Dans ce cas, avantageusement, la largeur la plus grande de cette nervure, à sa base, est supérieure à la largeur de l'orifice 30.

Dans ce cas également, quand les moyens de fixation sont constitués d'une vis 300, la nervure se présente de façon très préférentielle sous la forme d'un pli avec des faces planes formant un V ou analogue dont la pointe (sommet du pli) est tournée vers la première face 11 de la plaque de tête 10 qui est opposée à la seconde face 12 sur laquelle sont fixées les pattes 21, 22 et dont les deux extrémités libres des deux barres du V sont donc tournées vers la face 12.

Quant à la tête d'épaulement 302 de la vis 300, elle peut ainsi prendre appui sur une plus grande surface de contact, tout en créant en outre une pression plus importante sur la partie de la plaque de renfort 40 qui sera enfichée dans la rainure Ra de la lamelle L1, L2.

Il est bien précisé que la cheville d'assemblage selon l'invention peut comporter une nervure 41, 42 en forme de pli comme celle qui est illustrée sur la figure 5, ou uniquement des nervures comme celles qui sont illustrées sur les figures 1 à 4, ou une combinaison de ces réalisations. L'homme du métier saura choisir la réalisation qui lui convient.

L'utilisation et la pose d'une cheville d'assemblage selon l'invention sont les mêmes que celles des chevilles d'assemblage de l'art antérieur. Aussi, elles ne seront pas spécifiquement explicitées ici, dans l'unique souci de simplifier la description.

## Revendications

1. Cheville d'assemblage pour relier entre eux au moins trois corps (L1, L2, L3) pour la réalisation d'un plancher ou d'un bardage, comportant
• une plaque de tête (10) de forme sensiblement parallélépipédique réalisée en un premier matériau et délimitée par deux faces (11, 12) sensiblement planes et une tranche (13) reliant les deux faces, ladite plaque de tête définissant un premier plan (100) sensiblement parallèle aux dites deux faces (11, 12),
• au moins une première patte (21, 22) plane et définissant un second plan (200), ladite première patte étant solidaire de ladite plaque de tête (10) sur l'une (11) des deux faces (11, 12) de façon que le second plan (200) soit sensiblement perpendiculaire au premier plan (100) et qu'il partage ladite plaque de tête (10) en deux parties constituant respectivement deux ailes latérales (10-1, 10-2) situées de part et d'autre de ce second plan (200),
• au moins un orifice traversant (30) réalisé dans ladite plaque de tête (10) selon un axe (31) faisant un angle non nul par rapport au premier plan (100),
• une plaque de renfort (40) réalisée en un second matériau plus rigide que le premier, ladite plaque de renfort ayant une forme sensiblement homothétique de celle de la plaque de tête (10) selon un coefficient inférieur à l'unité, ladite plaque de renfort (40) étant noyée au moins partiellement dans ladite plaque de tête et comportant une ouverture (43) correspondant sensiblement au dit orifice traversant (30), ladite ouverture et ledit orifice traversant étant agencés pour recevoir des moyens de fixation,
**caractérisée par le fait qu'**elle comporte en outre au moins une nervure (41, 42) présentant un axe longitudinal (48, 49), ladite nervure étant solidaire en saillie de ladite plaque de renfort (40) de façon que son axe longitudinal soit sensiblement perpendiculaire au dit second plan (200) et parallèle au dit premier plan (100).

2. Cheville d'assemblage selon la revendication 1, **caractérisée par le fait que** la longueur de ladite nervure (41, 42) prise selon son axe longitudinal, est inférieure à la largeur de ladite plaque de renfort (40) prise selon une direction parallèle à cet axe longitudinal, de façon que les deux extrémités (41-1, 41-2) de la nervure ne soit pas confondues avec des bords opposés de ladite plaque de renfort (40).

3. Cheville d'assemblage selon l'une des revendications 1 et 2, **caractérisée par le fait qu'**elle comporte une autre nervure (41, 42), les deux nervures étant solidaires de ladite plaque de renfort (40), de part et d'autre de ladite ouverture (43).

4. Cheville d'assemblage selon la revendication 3, **caractérisée par le fait que** les deux dites nervures (41, 42) sont situées sur une même face de la plaque de renfort (40).

5. Cheville d'assemblage selon l'une des revendications précédentes, **caractérisée par le fait que** la au moins une nervure (41, 42) et ladite plaque de renfort sont réalisées à partir d'une pièce, la au moins une des nervures étant obtenue par déformation plastique de ladite pièce.

6. Cheville d'assemblage selon l'une des revendications précédentes, **caractérisée par le fait que** ladite plaque de tête (10) et ladite au moins une patte (21, 22) sont réalisées dans le même premier matériau, ledit premier matériau étant un matériau plastique, et que le second matériau est un matériau métallique.

7. Cheville d'assemblage selon l'une des revendications précédentes, **caractérisée par le fait qu'**elle comporte une seconde patte (22, 21) solidaire de la même face (11) de ladite plaque de tête (10) que celle dont est solidaire la première patte (21, 22), les première et seconde pattes étant situées dans le second plan (200) et de part et d'autre du dit orifice traversant (30).

8. Cheville d'assemblage selon l'une des revendications précédentes, **caractérisée par le fait que** ledit orifice traversant (30) est de forme oblongue selon un axe longitudinal, ce dit axe longitudinal étant perpendiculaire au second plan (200).

9. Cheville d'assemblage selon la revendication 8, **caractérisée par le fait que** ladite ouverture (43) présente une forme homothétique de celle de l'orifice traversant (30) selon un coefficient inférieur à l'unité.

10. Cheville d'assemblage selon l'une des revendications précédentes, **caractérisée par le fait que** ladite au moins une nervure (41, 42) est en forme de pli, et réalisée dans ladite plaque dé renfort (40) de façon que son axe longitudinal (48, 49) passe par ledit orifice (30), la pointe du dit pli étant tournée vers la face (11) de la plaque de tête (10) qui opposée à celle (12) dont est solidaire la au moins une patte (21, 22).

11. Jeu de pièces pour la réalisation d'un plancher ou d'un bardage comprenant une cheville d'assemblage selon l'une des revendications précédentes et trois corps (L1, L2, L3) constitués de deux lamelles de bois et d'un longeron, les deux lamelles comportant, sur au moins une partie de leur tranche, une rainure (Ra) d'une largeur donnée, **caractérisée par le fait que** :
- l'épaisseur de ladite plaque de tête (10) a une valeur au plus égale à celle de la largeur donnée, de façon que ses deux ailes latérales (10-1, 10-2) soient aptes à s'enficher respectivement au moins partiellement dans les deux rainures (Ra) respectivement des deux lamelles (L1, L2), que
- l'épaisseur de la au moins une première patte (21, 22), prise selon une direction perpendiculaire au second plan (200), est égale à la distance devant séparer les deux lamelles en regard (L1, L2) lorsqu'elles coopéreront respectivement avec les deux ailes, et que
- la hauteur de ladite au moins une patte (21, 22), prise selon une perpendiculaire au premier plan, est au plus égale à la distance séparant un bord de la rainure (Ra) d'une lamelle et la face de cette lamelle la plus proche de ce bord.

12. Jeu de pièces selon la revendication 11, **caractérisée par le fait que** la plaque de tête (10) comporte, sur au moins l'une de ses deux faces opposées (11, 12), au moins au niveau d'une des deux ailes latérales (10-1,10-2), au moins une surépaisseur (50) de très faible valeur, pour coincer l'aile latérale (10-1, 10-2) qui la porte, dans la rainure (Ra).

## Patentansprüche

1. Montagedübel zum Verbinden mindestens dreier Körper (L1, L2, L3) miteinander, um einen Bodenbelag oder eine Fassadenverkleidung herzustellen, umfassend:
• eine Kopfplatte (10) im Wesentlichen in Form eines Parallelepipeds, die aus einem ersten Material hergestellt ist und durch zwei im Wesentlichen ebene Flächen (11, 12) und eine Seitenfläche (13), die die beiden Flächen verbindet, begrenzt ist, wobei die Kopfplatte eine erste Ebene (100) definiert, die zu den beiden Flächen (11, 12) in Wesentlichen parallel ist,
• mindestens eine erste ebene Lasche (21, 22), die eine zweite Ebene (200) definiert, wobei die erste Lasche mit der Kopfplatte (10) an einer (11) der beiden Flächen (11, 12) fest verbunden ist, derart, dass die zweite Ebene (200) zu der ersten Ebene (100) im Wesentlichen senkrecht ist und die Kopfplatte (10) in zwei Teile unterteilt, die entsprechend zwei Flügel (10-1, 10-2) bilden, die sich beiderseits dieser zweiten Ebene (200) befinden,
• mindestens eine Durchgangsöffnung (30), die in der Kopfplatte (10) längs einer Achse (31), die in Bezug auf die erste Ebene (100) einen von null verschiedenen Winkel bildet, ausgebildet ist,
• eine Verstärkungsplatte (40), die aus einem zweiten Material hergstellt ist, das starrer als das erste Material ist, wobei die Verstärkungsplatte eine Form aufweist, die zu jener der Kopfplatte (10) im Wesentlichen homothetisch mit einem Koeffizienten kleiner als eins ist, wobei die Verstärkungsplatte (40) zumindest teilweise in die Kopfplatte eingelassen ist und eine Öffnung (43) aufweist, die im Wesentlichen der Durchgangsöffnung (30) entspricht, wobei die Öffnung und die Durchgangsöffnung dafür ausgelegt sind, Befestigungsmittel aufzunehmen,
**dadurch gekennzeichnet, dass** er ferner mindestens eine Rippe (41, 42) umfasst, die eine Längsachse (48, 49) aufweist, wobei die Rippe von der Verstärkungsplatte (40) vorsteht und damit fest verbunden ist, derart, dass die Längsachse zu der zweiten Ebene (200) im Wesentlichen senkrecht und zu der ersten Ebene (100) im Wesentlichen parallel ist.

2. Montagedübel nach Anspruch 1, **dadurch gekennzeichnet, dass** die Länge der Rippe (41, 42 in Richtung ihrer Längsachse kleiner als die Breite der Verstärkungsplatte (40) in einer Richtung parallel zu dieser Längsachse ist, derart, dass die beiden Enden (41-1, 41-2) der Rippe mit den gegenüberliegenden Rändern der Verstärkungsplatte (40) nicht zusammenfallen.

3. Montagedübel nach einem der Ansprüche 1 und 2, **dadurch gekennzeichnet, dass** er eine weitere Rippe (41, 42) umfasst, wobei die beiden Rippen mit der Verstärkungsplatte (40) beiderseits der Öffnung (43) fest verbunden sind.

4. Montagedübel nach Anspruch 3, **dadurch gekennzeichnet, dass** die beiden Rippen (41, 42) auf derselben Fläche der Verstärkungsplatte (40) angeordnet sind.

5. Montagedübel nach einem der vorhergehenden Ansprüche, **dadurch gekennzeichnet, dass** die mindestens eine Rippe (41, 42) und die Verstärkungsplatte aus einem Teil gebildet sind, wobei die mindestens eine Rippe durch plastische Verformung des Teils erhalten wird.

6. Montagedübel nach einem der vorhergehenden Ansprüche, **dadurch gekennzeichnet, dass** die Kopfplatte (10) und die mindestens eine Lasche (21, 22) aus demselben ersten Material hergestellt sind, wobei das erste Material ein Kunststoff ist, und dass das zweite Material ein metallisches Material ist.

7. Montagedübel nach einem der vorhergehenden Ansprüche, **dadurch gekennzeichnet, dass** er eine zweite Lasche (22, 21) umfasst, die mit derselben Fläche (11) der Kopfplatte (10) fest verbunden ist wie jene, mit der die erste Lasche (21, 22) fest verbunden ist, wobei die erste und die zweite Lasche in der zweiten Ebene (200) und beiderseits der Durchgangsöffnung (30) angeordnet sind.

8. Montagedübel nach einem der vorhergehenden Ansprüche, **dadurch gekennzeichnet, dass** die Durchgangsöffnung (30) eine längliche Form entlang einer Längsachse hat, wobei diese Längsachse zu der zweiten Ebene (200) senkrecht ist.

9. Montagedübel nach Anspruch 8, **dadurch gekennzeichnet, dass** die Öffnung (43) eine Form aufweist, die zu jener der Durchgangsöffnung (30) homothetisch mit einem Koeffizienten kleiner als eins ist.

10. Montagedübel nach einem der vorhergehenden Ansprüche, **dadurch gekennzeichnet, dass** die mindestens eine Rippe (41, 42) die Form einer Falte hat und in der Verstärkungsplatte (40) in einer Weise ausgebildet ist, dass ihre Längsachse (48, 49) durch die Öffnung (30) verläuft, wobei die Spitze der Falte der Fläche (11) der Kopfplatte (10) zugewandt ist, die sich gegenüber jener (12) befindet, mit der die mindestens eine Lasche (21, 22) fest verbunden ist.

11. Teilesatz für die Herstellung eines Bodenbelags oder einer Fassadenverkleidung, umfassend einen Montagedübel nach einem der vorhergehenden Ansprüche und drei Körper (L1, L2, L3), die aus zwei Holzlamellen und einem Längsträger gebildet sind, wobei die beiden Lamellen zumindest auf einem Teil ihrer Seitenfläche eine Nut (Ra) mit gegebener Breite aufweisen, **dadurch gekennzeichnet, dass**:
- die Dicke der Kopfplatte (10) einen Wert hat, der höchstens gleich jenem der gegebenen Breite ist, derart, dass ihre beiden seitlichen Flügel (10-1, 10-2) jeweils zumindest teilweise in die beiden Nuten (Ra) der beiden jeweiligen Lamellen (L1, L2) einsteckbar sind, dass
- die Dicke der mindestens einen ersten Lasche (21, 22) in einer Richtung senkrecht zu der zweiten Ebene (200) gleich dem Abstand ist, der die beiden einander gegenüber befindlichen Lamellen (L1, L2) trennen soll, wenn sie jeweils mit den beiden Flügeln zusammenwirken, und dass
- die Höhe der mindestens einen Lasche (21, 22) in einer Richtung senkrecht zu der ersten Ebene höchstens gleich dem Abstand ist, der einen Rand der Nut (Ra) einer Lamelle von der Fläche dieser Lamelle, die sich am nächsten bei diesem Rand befindet, trennt.

12. Teilesatz nach Anspruch 11, **dadurch gekennzeichnet, dass** die Kopfplatte (10) mindestens auf einer ihrer beiden einander gegenüberliegenden Flächen (11, 12) mindestens auf Höhe eines der beiden seitlichen Flügel (10-1, 10-2) mindestens eine Verdickung (50) mit sehr geringem Wert aufweist, um den seitlichen Flügel (10-1, 10-2), der sie trägt, in der Nut (Ra) einzuklemmen.

## Claims

1. An assembly dowel for connecting together at least three bodies (L1, L2, L3) for making a floor or cladding, the dowel comprising:
- a head plate (10) substantially of rectangular parallelepiped shape made out of a first material and defined by two substantially plane main faces (11, 12) and by an edge face (13) interconnecting the two main faces, said head plate defining a first plane (100) substantially parallel to said two main faces (11, 12);
- at least one plane first tab (21, 22) defining a second plane (200), said first tab being secured to said head plate (10) via one of its two main faces (11) so that the second plane (200) is substantially perpendicular to the first plane (100) and subdivides said head plate (10) into two portions respectively constituting two side flanges (10-1, 10-2) situated on either side of the second plane (200);
- at least one through orifice (30) made in said head plate (10) along an axis (31) forming a non-zero angle relative to the first plane (100); and
- a reinforcing plate (40) made of a second material that is more rigid than the first material, said reinforcing plate being of a shape that is substantially geometrically similar to the shape of the head plate (10) with a scale factor of less than unity, said reinforcing plate (40) being embedded at least in part in said head plate and including an opening (43) corresponding substantially to said through orifice (30), said opening and said through orifice being arranged to receive fastener means;
the dowel being **characterized in that** by the fact that it further comprises at least one rib (41, 42) presenting a longitudinal axis (48, 49), said rib being secured to project from said reinforcing plate (40) in such a manner that its longitudinal axis is substantially perpendicular to said second plane (200) and parallel to said first plane (100).

2. An assembly dowel according to claim 1, **characterized by** the fact that the length of said rib (41, 42) measured along its longitudinal axis is less than the width of said reinforcing plate (40) measured along a direction parallel to said longitudinal axis, such that the two ends (41-1, 41-2) of the rib do not coincide with the opposite edges of said reinforcing plate (40).

3. An assembly dowel according to claim 1 or claim 2, **characterized by** the fact that it includes another rib (41, 42), the two ribs being secured to said reinforcing plate (40) on either side of said opening (43).

4. An assembly dowel according to claim 3, **characterized by** the fact that said two ribs (41, 42) are situated on a common main face of the reinforcing plate (40).

5. An assembly dowel according to any preceding claim, **characterized by** the fact that at least one rib (41, 42) and said reinforcing plate are made from a single part, the at least one of the ribs being obtained by plastic deformation of said part.

6. An assembly dowel according to any preceding claim, **characterized by** the fact that said head plate (10) and said at least one tab (21, 22) are made out of the same first material, said first material being a plastics material, and that the second material is a metal material.

7. An assembly dowel according to any preceding claim, **characterized by** the fact that it includes a second tab (22, 21) secured to the same main face (11) of said head plate (10) as the plate to which the first tab (21, 22) is secured, the first and second tabs being situated in the second plane (200) and on either side of said through orifice (30).

8. An assembly dowel according to any preceding claim, **characterized by** the fact that said through orifice (30) is oblong in shape along a longitudinal axis, said longitudinal axis being perpendicular to the second plane (200).

9. An assembly dowel according to claim 8, **characterized by** the fact that said opening (43) presents a shape that is geometrically similar to the shape of the through orifice (30) with a scale factor less than unity.

10. An assembly dowel according to any preceding claim, **characterized by** the fact that said at least one rib (41, 42) is in the form of a fold made in said reinforcing plate (40) in such a manner that its longitudinal axis (48, 49) passes through said orifice (30), the tip of said fold facing towards the main face (11) of the head plate (10) that is opposite from its main face (12) to which the at least one tab (21, 22) is secured.

11. A set of parts for making a floor or cladding and comprising an assembly dowel according to any preceding claim and three bodies (L1, L2, L3) constituted by two slats of wood and a stringer, the two slats including in at least a portion of their edge faces a respective groove (Ra) of given width, the set of parts being **characterized by** the fact that:
- the thickness of said head plate (10) has a value that is no greater than the given width, so that its two side flanges (10-1, 10-2) are suitable for engaging respectively at least in part in the two respective grooves (Ra) of the two slats (L1, L2);
- the thickness of the at least one first tab (21, 22) measured in a direction perpendicular to the second plane (200), is equal to the distance that is to lie between the two facing slats (L1, L2) when they co-operate respectively with the two flanges; and
- the height of said at least one tab (21, 22) measured along a perpendicular to the first plane is no greater than the distance between an edge of the groove (Ra) of one slat and the main face of the slat that is closest to the edge.

12. A set of parts according to claim 11, **characterized by** the fact that the head plate (10) includes, on at least one of its two opposite main faces (11, 12), at least in register with one of the two side flanges (10-1, 10-2), at least one region of extra thickness (50) of very small value, in order to wedge the side flange (10-1, 10-2) that carries it in the groove (Ra).
